Europäisches Patentamt

European Patent Office

Office européen des brevets

(19)

(11) Publication number: **0 199 681**
**A2**

(12)

# EUROPEAN PATENT APPLICATION

(21) Application number: **86830085.6**

(22) Date of filing: **11.04.86**

(51) Int. Cl.⁴: **B 05 B 12/14**
**B 05 B 13/04**

(30) Priority: **16.04.85 IT 2035485**

(43) Date of publication of application:
**29.10.86 Bulletin 86/44**

(84) Designated Contracting States:
**BE DE FR GB**

(71) Applicant: **GAIOTTO IMPIANTI S.p.A.**
**Statale Milano Crema km 27**
**I-26010 Vaiano Cremasco (CR)(IT)**

(72) Inventor: **Biadigo, Mario**
**Via IV Novembre 29**
**I-20094 Corsico (Milan)(IT)**

(72) Inventor: **Gaiotto, Cesare**
**Statale Milano Crema km. 27**
**I-26010 Vaiano Cremasco (Cremona)(IT)**

(72) Inventor: **Gaiotto, Alvise**
**Via Garibaldi 36**
**I-26010 Monte Cremasco (Cremona)(IT)**

(74) Representative: **Calvani, Domenico**
**UFFICIO BREVETTI ING. CALVANI, SALVI & VERONELLI**
**4, Piazza Duca d'Aosta**
**I-20124 Milan(IT)**

(54) Process and apparatus for the automatic spray enamelling of ceramic articles in different colours.

(57) Process and apparatus for the automatic enamelling of ceramic sanitary fixtures, porcelainized steel bath tubs, electro-domestic appliances and the like, wherein enamelling takes place in different colors with rapid, automatic change of the spraying means which are handled by a robot operator.

EP 0 199 681 A2

./...

Croydon Printing Company Ltd

FIG. 1

PROCESS AND APPARATUS FOR THE AUTOMATIC ENAMELLING AND PAINTING, IN DIFFERENT COLORS, OF PIECES OF CERAMIC-, METAL- OR OTHER MATERIALS, IN PARTICULAR CERAMIC SANITARY FIXTURES, ELECTRO-DOMESTIC APPLIANCES, AND THE LIKE.

This invention relates to a process and an apparatus for the automatic enamelling, in different colors, of pieces of ceramic material, metal material or others, in particular ceramic sanitary fixtures, electro-domestic appliances and the like.

At present the color enamelling or painting of sanitary fixtures made of ceramic material and of electro-domestic appliances made of metal material, is generally effected on mass-produced series or sets of pieces to be enameled, a first series of which, as composed for example of ceramic wash-basins, may receive a blue enamel, a second series, for example of w.c. bowls, also of ceramic material, may be white painted, and so on. These differently colored series of pieces are produced, enameled and finished to be then stored by the manufacturer according to a production plan which may result in great quantities of stored up pieces that are likely to remain as dead or unsold stocks, owing to the fact that the customer of that manufacturer may request enameled items differently colored from the pieces in stock.

Moreover, the method of enamelling pieces in series which may also be great in number, is rather complicated and requires relatively long times, particularly when it is necessary to change from one spray gun to another spray gun of which the former delivers an enamel spray of a certain color and the latter a spray of enamel of another color.

Also, it is not to be excluded the fact that some of the enamel-spraying guns being remained for even a short time at rest may, when operated again, be unable to work due to their nozzles being plugged by lacquer that has set meanwhile.

The main object of this invention is to avoid the above and other disadvantages by providing a process for automatic

enamelling, using different colors or lacquers or paints or the like, of pieces of ceramic- metal- or other materials, such as sanitary fixtures, electro-domestic appliances,

etc., characterized in that, during the travel effected through a spraybooth by a chain conveyor carrying in succession different pieces to be enameled, which may also be arranged in small series of pieces equal to, or different from one another, such as for example alternate pieces of w.c. bowls, bidets, and wash-basins, at least one robot conveniently programmed from a central computing system and provided with a gripper means or the like at its wrist, automatically grips from a suitable magazine a spray gun that will spray the above mentioned series of successive

- 3 -                                    0199681

or alternate pieces with enamel of the color required by them, the gun being connected to a tank containing this particular color of enamel, in order to have said pieces enameled with that required color in a quick manner;

the robot, once enamelling with said color is completed, bringing the used spray gun back to the associated magazine, then gripping another spray gun connected to a corresponding tank of another color, bringing it into position in the spraybooth and performing the enameling treatment on the piece or pieces designed to be coverd

with enamel of that color, the different automatized steps taking place in succession according to a program;

more specifically, the robot-gripper chooses from an associated magazine a single spray gun corresponding to the desired color, brings it into position in the spraybooth, remains in this position the time necessary for the spray operation to be completed, while accomplishing some appropriate movement to this end, then the robot gripper moves back to the magazine to hand over the used spray gun thereto, and, if necessary, it grips another

spray gun using a different color of lacquer from the preceding one to automatically enamel therewith another or other pieces concerned, the process being conducted in a rapid, automatic manner so as to permit the corresponding piece(s) to be enameled with the same color in very reduced times.

The method described above may be modified in many ways as to the details of construction and handling of the apparatus consisting of the spraybooth, the work-carrying carrousel conveyor, the handling robot, the spray gun magazine, and the computer which may be either an individual unit particular to this plant section, or a unit common to the whole plant, all of these possible variations and modifications being intended to fall within the scope of the invention so long as they are based on the inventive principle as set forth herein before.

The method as noted above, provides that the spray guns, when at rest, are arranged in a suitable holding magazine from which the guns, one at a time, depending on the color required at that given time for that given piece(s) being treated, are taken as a function of the movements accomplished by the robot which is controlled from the computerized system by a particular software controlling all of the executions necessary for changing the spray guns.

When at rest, the spray guns are periodically operated, for example each 20 to 90 s or 2-3 times/min., in order to keep their spray nozzles free from any lumps of hardened material and, thus, ready to work at any time; moreover, at regular periods of time, each gun head is mechanically cleaned by means of a rotary or reciprocating brush.

With the process of the invention it is possible to identify each piece under treatment through cameras capable of checking the shape characteristics of a piece to be enameled so that instructions can be imparted to the robot enabling it to go and choose the spray gun that will deliver the enamel of the color intended for the piece under control, at that time.

For the identification of the piece(s) to be enameled, each piece can be provided with suitable means capable of informing the related devices in order to choose the color with which the piece is to be enameled; or the identification of the piece is made via television cameras which send first to the computer, and then to a switching line, the information of the color to be utilized at that time.

The automatic apparatus for enamelling a great variety of pieces in the desired colors as set forth above is to be intended as making a part of a complete production line of which the apparatus of the invention is one of the operating sections; said production line may include, in succession, apparatus for shaping the pieces to be enameled, baking means for the shaped products, then the apparatus of the invention and, finally, drying means for the finished pieces. Instead of an individual processor or computer unit for controlling operation of the enamelling robot, the spraybooth and the carrousel conveyor carrying the pieces to be enameled, the entire plant, comprising this particular and distinguishing section, may include a common computerized system which controls all of the various plant sections and, therefore, also the section comprising the automatized enameling spraybooth.

It has already been mentioned that the described enamelling process of the invention, and the apparatus for carrying out thereof, which ensure rapidity of the controls and, thus, speed of the working steps connected with the various robot movements, of the pieces to be enameled and of all the spraybooth movable parts, permit a manufacturer to plan its production on customer order thereby to avoid "blind" production programs leading to store-burdening stocks of pieces that are likely to become obsolete and therefore unsoldable in a short period of time. It is clear that the speed of work and the adaptability of the enameling means to operate such that dead stocks are avoided and a new, highly favourable production range can be established, cannot be a mere statement but results from the provision of automatisms, even of complicated design, which are to perform, within and for the required times, those specific actions which enable to achieve the above objective, in particular the automatic enamelling, also of individual pieces, with paints sprayed precisely on the piece or pieces ordered by a customer.

The above and further features of the invention will now be described in full detail in connection with the accompanying drawings which show, by way of a non restrictive example, a preferred form of an automatic enameling plant according to the invention.

In the drawings :

Figure 1 is a diagrammatic plan view showing the main parts of the patented apparatus for carrying out the

automatic enamelling process according to the invention;

Figure 2 is an enlarged scale view showing, on the right and the left sides, the robot pulse provided with gripper means, and, at the center, in diagrammatic form, the same robot utilized for gripping, one at a time, the spray guns delivering each a particular color;

Figure 3 is a diagrammatic side view of a structure for holding the spray guns when at rest, the spray guns being arranged in a line that, in this case, is at an angle of 45° to the floor; and

Figure 4 is a diagrammatic side view showing the part of the plant section making the subject matter of the invention, when the robot has already chosen a spray gun from which there will be delivered, according to a computerized program, precisely the color intended for that piece which is under treatment.

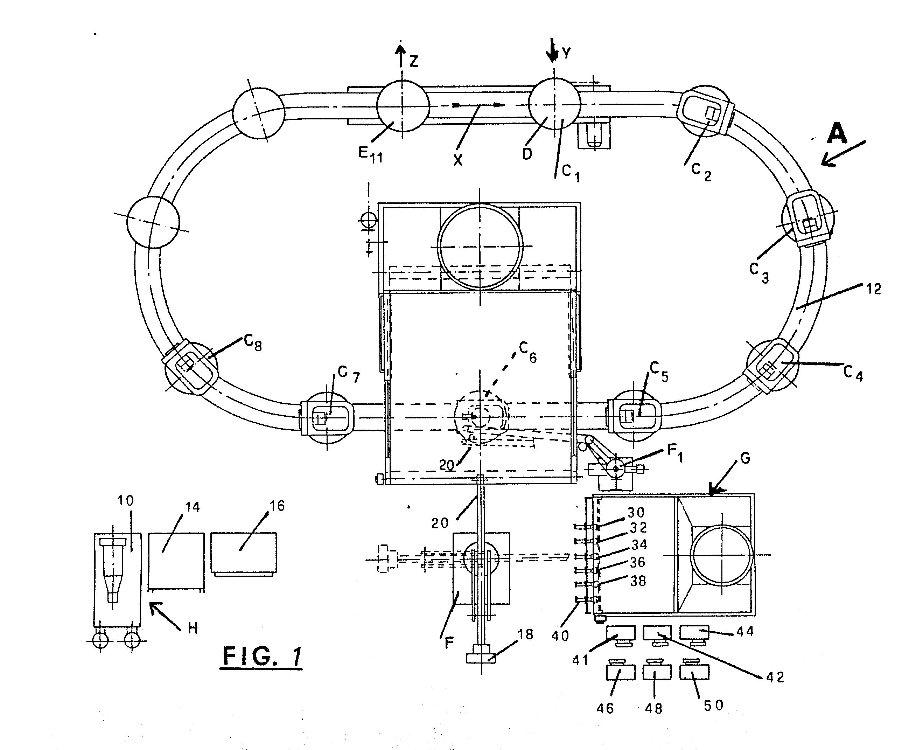

Referring now to the above figures and at first to figure 1, there is shown at A an automatic apparatus adapted for carrying out the continuous enamelling process of the invention, said apparatus A including an enamelling spraybooth B through which are made to pass, one after the other, pieces $C_1$, $C_2$, $C_3$ . . . .$C_6$...$C_8$...$C_{11}$ to be treated, which pieces are supported on respective supports D, in this case there being eleven supports D secured to the chain 12 of a carrousel conveyor which is moved in the clockwise direction of arrow X in a manner known. In this case the pieces to be automatically enameled in colors that may be the same or different, enter the apparatus in the direction of arrow Y, when the pieces are to be treated, and come out of the apparatus in the direction of arrow Z, when the pieces have been treated.

Shown at F is a robot which operates on commands and information from a computer X in which 10 is an hydraulic station, 14 the computer itself and 16 a control board.

18 is the head of robot F and 20 the 'wrist' thereof. G is a special magazine in which are arranged spray guns 30, 32, 34, 36, 38, 40 connected to enamel tanks 41, 42, 44, 46 48, 50 respectively. It is noted that the spray guns 30,32,34...40 are arranged so as to lie in a line whose axis is sloping with respect to the horizontal plane of magazine G, this line being preferably inclined by 45°

in order to make for the robot F to work under easier conditions when it has to choose that spray gun, from among the set of six, which is connected to the tank containing the color intended for enameling that piece, among the various pieces on carrousel conveyor, which must be enameled expressly with that color.

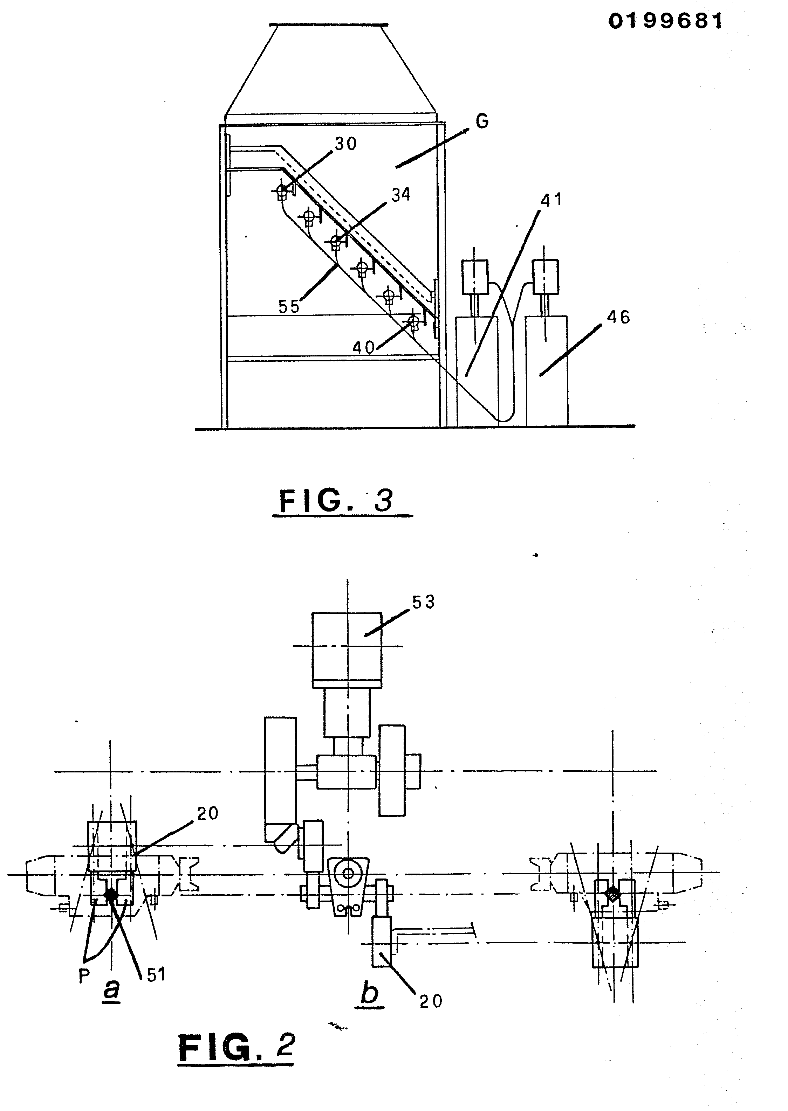

Reference is made now to figure 2 which shows, on an enlarged scale, the parts of the robot adapted for gripping the spray guns 30 to 40, one at the time, as mentioned above. Shown at a is the robot wrist 20 equipped with gripper P. The gripper P has jaws designed to open or close, on command issuing from individual computerized system or from a central processing unit of the whole plant (not showns), to release or grip the shank 51 of that spray gun chosen from among the set of six such guns being shown by way of example in the drawings.

Diagrammatically shown at b is the part of robot F comprising the head 55 from which the entire electro-mechanical impulsion is derived and is transmitted to the robot wrist to enable it to perform all of such movements and handling actions as are necessary to result, in this case, and briefly, in moving said robot wrist to near the robot-programmed and robot-operated spray gun, gripping said spray gun by gripper P and transferring the gun that has been released from the gripper of device 55 to be passed to gripper P on pulse 20 of the arm of robot F. As it should be apparent, when the robot F has attained the position $F_1$ and assumed the proper posture, it will, by its wrist/holding the concerned spray gun, point said gun at the surface of a concerned piece $C_6$ -in the example shown a w.c. bowl- which latter is, in a manner known, submitted to congruent movements so that these movements combined with the movements of the robot wrist 20 cause the entire surface of the piece $C_6$, which is to be enameled with paint sprayed by that gun, to be effectively and completely treated as required. Assuming now that,after the thus enameled piece $C_6$ has been carried out of the spraybooth B ·on carrousel conveyor 12, the next piece $C_5$ is to be enameled the same color as the piece $C_6$; then, no movement of any significance will be effected by the robot F,  and, when $C_5$ has attained the position previously occupied by $C_6$, the surface of $C_5$ will be sprayed by the spray gun held by the robot gripper P, in the same color as before. Assume now that following to the piece $C_6$ having been carried out of spraybooth B -which piece $C_6$ has for example been enameled the same red color as the preceding piece $C_7$- the next entering piece $C_5$ is to be enameled in green color.

Then, once the piece $C_5$ is in its correct initial posture, the arm of robot F moves congruently in response to instruction issued from individual system I, or from

the CPU (not shown), to hand back the spray gun using the red enamel supplied from a respective tank, e.g. tank 44, said gun, e.g. gun 34, being received in the gripper of device 55. Then, the gripper P at the robot wrist grips another spray gun, e.g. the gun 40 connected with tank 50 containing the green enamel. In accomplishing the instructions from the center system, the robot brings the spray gun 40 into position so that when the carrousel conveyor has stopped with the piece $C_5$ facing the spray gun 40, the spraying with green enamel directed on to the piece $C_5$ is started and all of such handling movements take place as are necessary to achieve the painting operation under the best conditions of treatment.

When enamelling is achieved on piece $C_5$, the same procedure as described above is repeated, with the movements of the carrousel conveyor 12, the robot F and the spray guns being at any time such as to enable the best work finishing to be obtained.

However, an important feature is the identification of each work piece from both the points of view of the profile thereof and the enamel with which it is to be covered, and this again with the purpose of achieving an automatic and quick enamelling operation that permits dead stocks to be avoided and work to be practically made on customer order.

This identification of the various pieces that are presented, one by one, in the enamelling spraybooth B, can advantageously take place by the use of a television camera capable of identifying the piece to be enameled in order to transmit correct information to robot F, so that the robot, which is holding the selected spray gun (namely the spray gun due to deliver the selected enamel), will be enabled to perform in a continuous manner the program already entered for each type of concerned piece.

Each piece to be enameled may be provided with suitable magnetic means or 'targets' capable of transmitting messages to the center system which enable the robot to select those spray guns that deliver precisely the colors with which the pieces are to be enameled; as a matter of fact, said spray guns being working one at a time.

From a technical point of view, the apparatus of the invention will obviously form one section of the line of production of the piece, which line can go from the step of compacting the ceramic earths to form the piece, through the step of drying the enamel sprayed on the formed pieces up to the final step of forwarding the finished pieces to the customer.

It is to be remembered that when the spray guns are at rest, or during the time when only one of them is used and the other ones are inactive, these inutilized guns, as arranged in magazine G, are periodically (say each 20
to 120s or 2-3 times/min) operated so as to clear the
respective spray nozzles from material that is likely to
set therein and to cause plugging of the spray channels.
In this way the delivery nozzles are at any time kept
free and ready for use. Moreover, an automatic brushing
operation provides for mechanical cleaning of each gun
head.

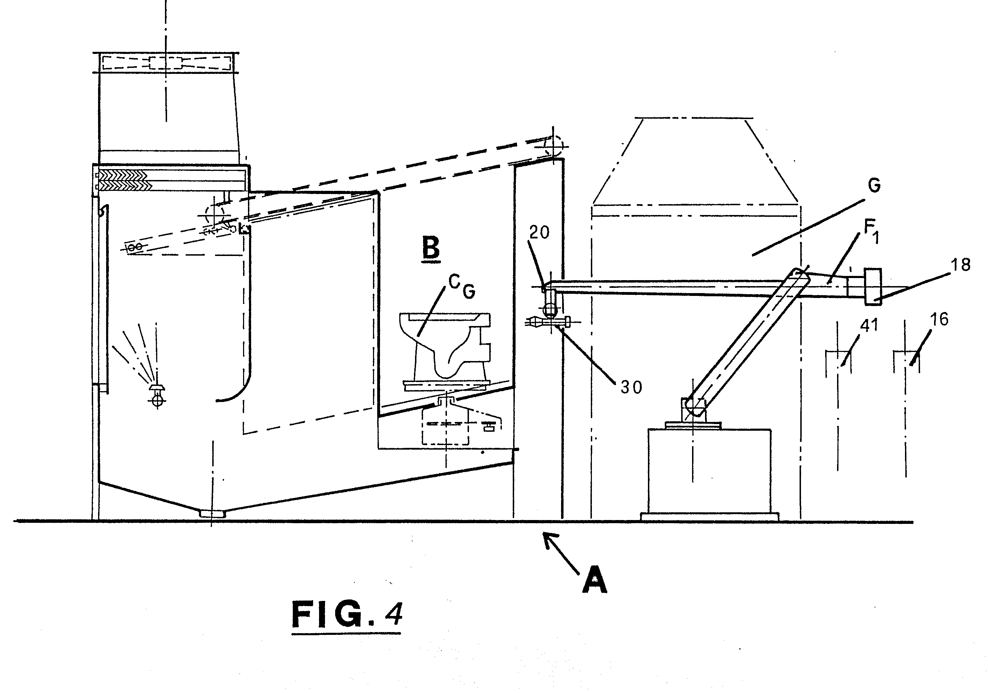

Figure 4 is a diagrammatic side view of the apparatus
A in figure 1 so that the parts shown in figure 4 are the
same, and are designated by the same references, as in
figure 1.

From the above, it should be apparent that the disadvantages mentioned at the beginning, especially in
relation to the fact of having to store quantities even
high in number of enameled ceramic pieces or electro-
domestic appliances, or the like, treated in enamelling
spraybooths, are avoided by the present invention, which pro-
vides for the described plant automatization enabling a
manufacturer to achieve a business production that is
substantially dependent on customer demand, rather than
on trade reckoning which shows often to be unrealistic.

If for example a customer desires to have, obviously
with urgency, a set of five pieces each, of white, green,
red, violet and yellow wash-basins, this request can be
satisfied promptly by delivering to the customer precisely those pieces just in the restricted number of items as ordered.

As already said, modifications may be made to both the automatic enamelling process of the invention and the apparatus for carrying out thereof, and may be in relation to either the steps of the process or the mechanical, electrical and electronic parts of the apparatus, without departing from the spirit and scope of the panted invention.

## CLAIMS

1. A process or method for the automatic enamelling using different colors or lacquers or paints or the like, of items made of ceramic, of metal or other materials, such as sanitary fixtures, electro-domestic appliances,
     the like
and / characterized in that, while the various pieces to be enameled are travelling through a spraybooth, the pieces being carried in succession on a chain conveyor means on which they may also be arranged in small series or sets of pieces equal to, or different from one another, as for example alternate pieces of w.c. bowls, bidets and wash-basins, at least one robot which is conveniently

programmed. from a computerized system and which is equipped at its wrist with a gripper or the like holding means, automatically grips from a suitable magazine a spray gun due to deliver a color required by one or more pieces in said series of successive or alternate pieces, the spray gun being connected to an associated tank containing paint or enamel material of the intended color for the piece or pieces under treatment, so as to obtain the rapid enamelling of the piece or pieces requiring enamelling with said color, the robot, after the enamelling with said color is achieved, bringing the used spray gun back to the associated magazine, then gripping another spray gun connected with an associated

tank of another color, bringing this other spray gun into position in the enamelling spraybooth and performing the enamelling operation on the piece or pieces being to be covered with that color, the various automatized steps, as controlled by appropriate software, taking place in sequence according to a programming which results in that:

the robot gripper chooses from the associated magazine only that spray gun corresponding to the desired color, brings it into position in the enamelling spraybooth, remains in this position the time necessary for achieving enamelling operation while performing the appropriate movements to this end, then moves back to the spray gun magazine to hand over said used gun thereto, and, if necessary, grips another spray gun corresponding to a lacquer differing in color from the preceding one, in order to automatically enamel   the other piece or pieces concerned, the procedure taking place in such an automatic and rapid manner as to permit the corresponding pieces to be enameled with the same color in very reduced times.

2. The process according to claim 1, characterized in that the spray guns, when inutilized, are arranged in a suitable holding magazine, the guns being taken out of said magazine, one at a time depending on which color is required by the concerned piece or pieces under treatment at that time, as a funcion of the movements performed by the robot which is controlled from the computerized system;

in that the spray guns, when at rest, are periodically operated, say each 20 to 90s or 2-3 times/min., such that their spraying nozzles can be kept free from any lumps of set material and therefore ready to work at any time; and further in that a set of rotary or reciprocating brushes are provided for mechanical cleaning of the gun heads.

3. An automatic apparatus for enamelling the most various pieces of goods in the most convenient colors by the process according to claim 1, wherein the apparatus is a part of a complete production line, said apparatus forming one of the operating sections of said line, which line may go from apparatus for forming the pieces to be enameled, through the baking means, then through the apparatus making the subject matter of this patent, to the apparatus for drying the final products.

4. The apparatus according to claim 3, wherein a coding and control system is provided and is connected to a computer which controls operation of the enamelling robot of the associated spraybooth, as well as operation of the carrousel conveyor transporting the pieces to be enameled, the main plant including the particular and distinguishing section concerned being able to have a central computerized system capable of controlling all of the plant sections and therefore also the section comprising the automatized enamelling spraybooth according to the invention.

5. The apparatus according to claim 3, wherein the robot has a pulse provided with gripping and holding action which consists of a suitable pincer or gripper means, said gripper being capable of gripping the shank of a spray gun to be operated to deliver a given color, and of putting it again in place after the gun has performed its task, said gun as well as the other guns with their connected tanks containing enamels of the different colors expected to be used in a given instance, being each returned by said robot wrist to corresponding grippers of the gun holding magazine, said magazine holding all of the spray guns and being disposed in an inclined position, for example at about 40-50° with respect to the floor.

6. The apparatus according to claim 2, wherein, in order to identify the piece or pieces to be enameled, each piece is provided with appropriate means capable of sending information to the related devices for the choice of the color with which the piece is to be enameled, or capable of permitting identification of the piece via television cameras, the cameras sending information first to the computer and then to the addressing line, as to the color which is to be utilized at that moment.

7. The apparatus according to any of claims 3 to 6, and substantially as described herein before with reference to, and as shown in the accompanying drawings.

8. The apparatus according to claim 7 wherein the color for each piece is set either by the central computer controlling the whole of the plant or by a 'target' or 'destination' for small series, said target being carried by each piece due to be enameled whith that set color.

**FIG. 1**

73

0199681

FIG. 3

FIG. 2

**FIG.** *4*